# EUROPÄISCHE PATENTANMELDUNG

(11) **EP 0 876 886 A2**
(43) Veröffentlichungstag der Anmeldung: **11.11.1998**
(21) Anmeldenummer: 98810300.8
(22) Anmeldetag: 07.04.1998
(51) Int. Cl.: B27D 3/00, B27G 11/00, B27M 3/18

(54) **Verfahren zum Herstellen von Platten, insbesondere Türen sowie Anordnung zum Durchführen des Verfahrens**

(30) Priorität: 08.04.1997 CH 814/97
(71) Anmelder: Pius Schuler AG, 6418 Rothenthurm (CH)
(72) Erfinder: Schuler, Pius, 8126 Zumikon (CH)
(74) Vertreter: Groner, Manfred

(57) **Zusammenfassung**

Zum Herstellen von Platten (1), insbesondere Türen, werden wenigstens zwei Deckblätter (2, 3) mit einem Kern (6) und einem diesen Kern (6) umgebenden Rahmen (5, 7) mittels einer Presse (29) und eines Frequenzfeldes miteinander verleimt. Vor dem Auflegen der Deckblätter (2, 3) wird auf die Rahmen (5, 7) oder Deckblätter (2, 3) in den Randzonen eine Substanz aufgebracht, welche den Aushärtungsvorgang in der Randzone beschleunigt. Die Substanz ist insbesondere ein Härter, welcher das Frequenzfeld und/oder die Abbindereaktion in der Randzone beeinflusst.

## Beschreibung

Die Erfindung betrifft ein Verfahren zum Herstellen von Platten, insbesondere Türen, wobei zwei Deckblätter mit einem Kern und einem diesen Kern umgebenden Rahmen mittels einer Presse und eines Frequenzfeldes verleimt werden.

Zum Herstellen von Wohnungstüren aus Holz ist im Stand der Technik ein Verfahren bekannt, bei dem ein Innenteil auf einem rechteckigen, plattenförmigen Kern und einem diesen Kern umgebenden Rahmen gebildet wird und dieser Innenteil in einer Presse mit zwei Deckblättern verleimt wird. Der plattenförmige Kern ist in der Regel aus einem geeigneten Holzwerkstoff hergestellt, jedoch ist hier auch ein Kern aus anderen und unterschiedlichen Werkstoffen denkbar. Der Rahmen umgibt den Kern vollständig und ist aus vier Vierkantstäben zusammengestellt. Die beiden parallel gegenüberliegenden Deckblätter werden jeweils mit dem Kern und dem Rahmen verleimt und weisen ein Stärke von wenigen Millimetern auf. Das Verleimen erfolgt in einer Presse. Um das Aushärten des Leimes zu beschleunigen, ist die Anwendung eines Hochfrequenzfeldes dem Fachmann bekannt. Für ein solches Verfahren ist es in wirtschaftlicher Hinsicht wesentlich, dass die Aushärtzeit möglichst kurz gehalten werden kann. Dies gilt insbesondere für ein Verfahren, bei dem eine Einetagenpresse verwendet wird. Bei dieser wird in der Presse jeweils lediglich eine Tür verleimt. Eine kürzere Pressdauer wäre an sich durch eine Verstärkung des Frequenzfeldes möglich. Versuche hierzu führten jedoch zu Verbrennungen des Holzes oder zu einer ungenügenden Verleimung der Deckblätter insbesondere im Bereich des Rahmens.

Der Erfinder hat sich die Aufgabe gestellt, ein Verfahren der genannten Art derart weiterzubilden, dass die Pressdauer wesentlich kürzer gehalten werden kann als bisher und trotzdem eine zuverlässige Verleimung gewährleistet ist. Das Verfahren soll sich zur Herstellung von Türen unterschiedlicher Abmessungen und auch zur Herstellung von Platten mit ähnlichem Aufbau eignen. Insbesondere soll das Verfahren mit einer Einetagenpresse durchführbar sein. Das Verfahren soll keine sehr teuren Änderungen an einer solchen an sich bekannten Einlagenpresse erfordern.

Die Aufgabe ist gemäss Anspruch 1 gelöst. Die Substanz ist vorzugsweise ein handelsüblicher Härter. Die Beeinflussung des Frequenzfeldes bzw. der Abbindereaktion in der Randzone der Türe bzw. der Platte mittels der genannten Substanz ist somit wesentlich für das erfindungsgemässe Verfahren. Versuche haben gezeigt, dass mit dem erfindungsgemässen Verfahren ein Aushärten in etwa 20 Sekunden oder weniger erreicht werden kann. Vorteilhaft ist auch die geringe Erwärmung beim Pressvorgang, welche eine sofortige Weiterverarbeitung der Türen ohne vorgängige Klimatisation ermöglicht. Die Erfindung betrifft auch eine Anordnung zum Durchführen des Verfahrens, mit einer Presse und mit Mitteln zum Erzeugen eines Frequenzfeldes sowie einer Einrichtung zum Zusammenstellen der zu verleimenden Platte. Diese Anordnung ist dadurch gekennzeichnet, dass die Einrichtung einen Kipptisch sowie eine Vorrichtung zum Beleimen von zwei aneinanderliegenden Deckblättern aufweist. Diese Anordnung erlaubt ein sehr schnelles und einfaches Zusammenstellen der zu verleimenden Teile, derart, dass diese Arbeit von einer einzigen Bedienungsperson durchführbar ist. Nach einer Weiterbildung der Erfindung weist die Vorrichtung zum Beleimen zwei parallele, gegenüberliegende Reihen von Rollen auf, auf denen die beiden Deckblätter an gegenüberliegenden Rändern auflegbar sind.

Ein Ausführungsbeispiel der Erfindung wird nachfolgend anhand der Zeichnung näher erläutert. Es zeigen:
Figur 1 schematisch eine Ansicht einer erfindungsgemässen Platte,
Figur 2 einen Schnitt entlang der Linie II-II der Figur 1,
Figur 3 schematisch das Auflegen der beiden Deckblätter auf die Mittleschicht,
Figur 4 eine Ansicht des Innenteils,
Figuren 5a und 5b schematisch eine Tragvorrichtung für die beleimten Deckblätter,
Figur 6 schematisch eine Ansicht einer Presse,
Figur 7 schematisch eine Ansicht der Anordnung zur Durchführung des Verfahrens, und
Figur 8 schematisch einen Teilschnitt durch die Presse mit einer eingelegten Platte.

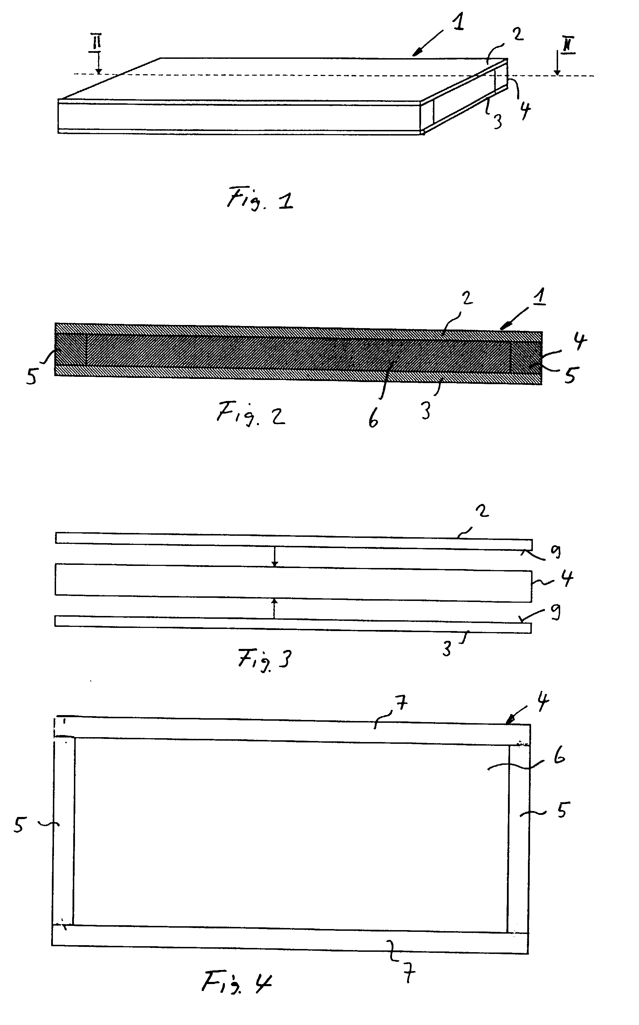

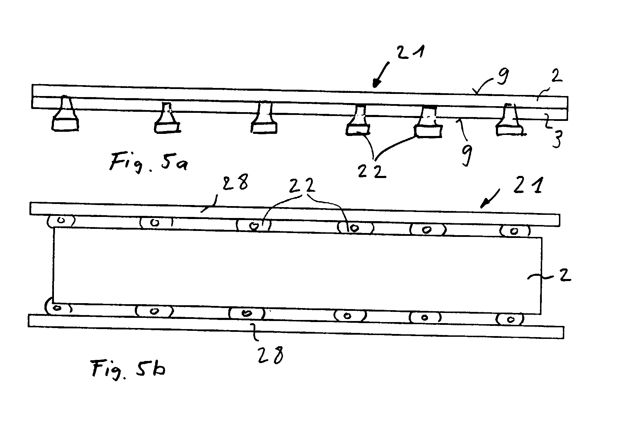

Die Figur 1 zeigt eine Platte 1, die aus zwei Deckblättern 2 und 3 sowie einem Innenteil 4 besteht. Die Platte 1 ist insbesondere zur Herstellung einer hier nicht gezeigten Wohnungstür vorgesehen. Jedoch sind auch andere Anwendungen dieser Platte 1 denkbar. Der Innenteil 4 besteht gemäss Figur 4 aus einem plattenförmigen Kern 6, der beispielsweise aus einem geeigneten Holzwerkstoff hergestellt ist. Der Rahmen 4 umgibt diesen Kern 6 und besteht aus Vierkantstäben 5 und 7, die lose aneinandergelegt sind. Die beiden Deckblätter 2 und 3 sind gemäss Figur 3 auf den Innenteil 4 gelegt und mit diesem verleimt. Dazu werden die Deckblätter 2 und 3 jeweils an der Innenseite 9 mit einer Schicht Leim versehen. Wie die Figur 2 zeigt, sind die Deckplatten 2 und 3 jeweils mit den Vierkantstäben 5 und 7 sowie mit dem Kern 6 verleimt. Die beiden Deckblätter 2 und 3 halten somit sowohl die Vierkantstäbe 5 und 7 als auch den Kern 6 zusammen.

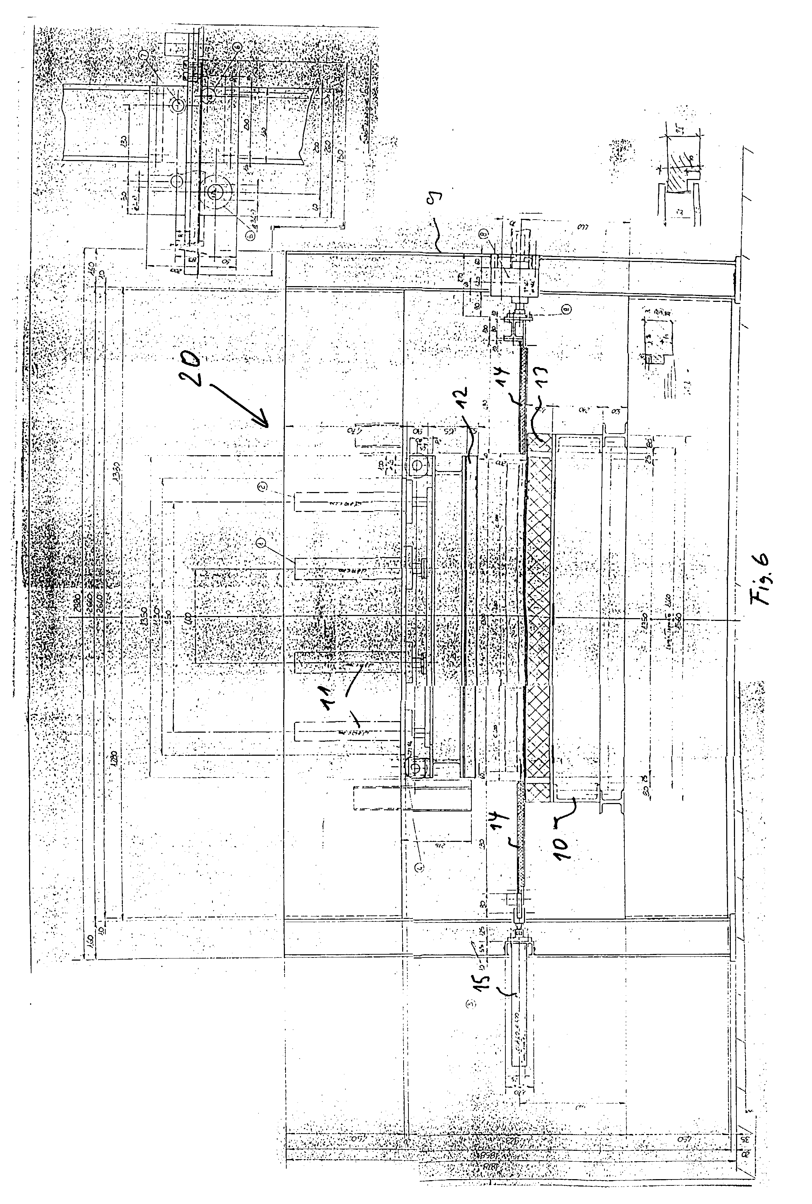

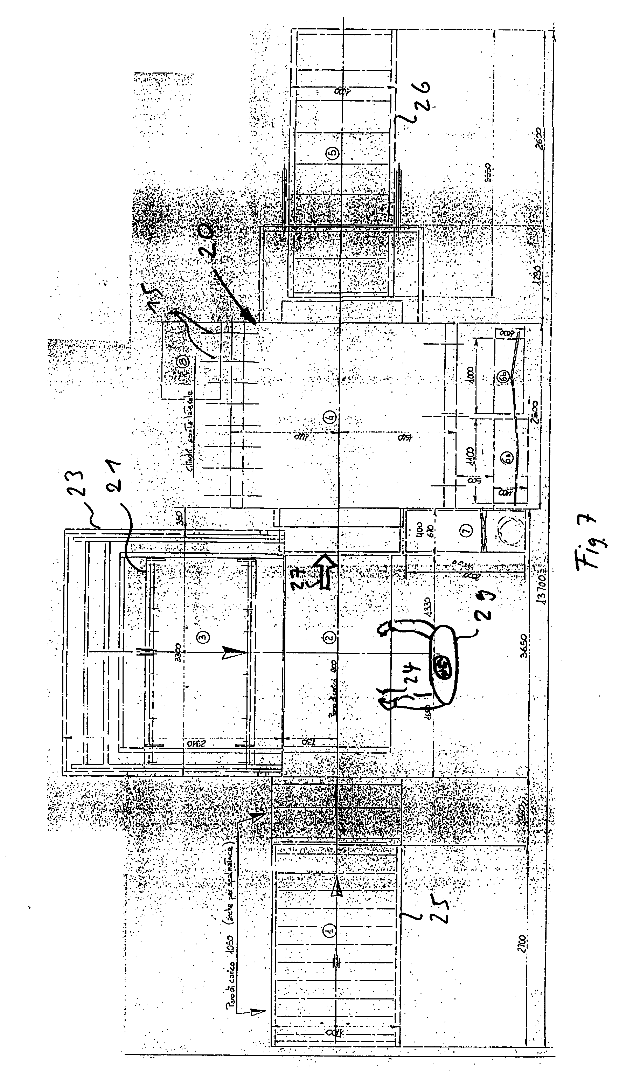

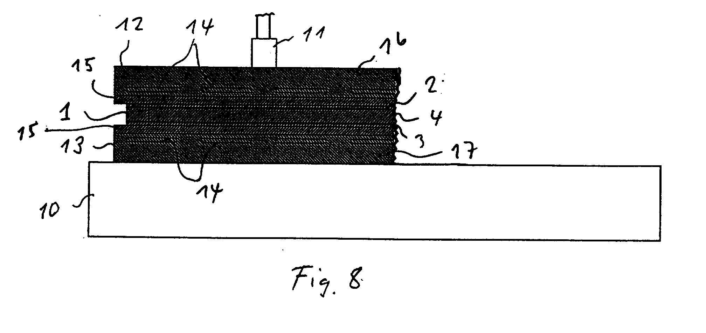

Das Verpressen der beiden Deckblätter 2 und 3 mit dem Innenteil 4 erfolgt in der in Figur 6 gezeigten Presse. Diese besitzt ein Maschinengestell 9 mit einem stillstehenden, stabilen Tisch sowie einem über diesem Tisch 10 angeordneten Pressteil 12, der mit Zylindern 11 vertikal bewegbar ist. Der feststehende Tisch 10 als auch der bewegliche Pressteil 12 weisen jeweils einen plattenförmigen Teil 16 beziehungsweise 17 auf, in die jeweils streifenförmige, im Abstand zueinander angeordnete Elektroden 14 eingebettet sind. Diese Elektroden 14 sind insbesondere aus Aluminium hergestellt und elektrisch so verbunden, dass in der in Figur 8 gezeigten Anordnung in den zu verleimenden Bereichen ein Hochfrequenzfeld erzeugbar ist. Durch diese Hochfrequenzfelder werden die Leimschichten erwärmt und härten dadurch schneller aus. Durch zwei Pressplatten 15, die vorzugsweise Epoxidharzplatten mit Glasfasern sind, wird eine Wellenbildung an den Deckschichtoberflächen verhindert. Diese Wellenbildung kann vermutlich infolge örtlicher Überhitzung durch verdampfendes Wasser entstehen. Beim Verpressen wird auf die Platte 1 ein vertikaler Druck ausgeübt, und gleichzeitig wird durch das Frequenzfeld das Aushärten beschleunigt. Ein Pressvorgang dauert beispielsweise etwa 20 Sekunden. Gleichzeitig mit dem vertikalen Pressdruck wird gemäss Figur 6 mit seitlichen Zylindern 15 über Anlegeteile 14 auf den Innenteil 4 ein seitlicher Druck ausgeübt, derarat, dass die Vierkantstäbe 5 und 7 am Kern 6 angepresst werden. Dadurch kann eine Spaltbildung zwischen den Vierkantstäben 5 und 7 und dem Kern 6 verhindert werden. Wesentlich ist, dass die Deckblätter 2 und 3 auch mit den Vierkantstäben 5 und 7 zuverlässig verleimt werden. Voraussetzung dazu ist ein entsprechendes Frequenzfeld auch im Bereich der Vierkantstäbe 5 und 7. Zur Beeinflussung des Frequenzfeldes im Bereich dieser Vierkantstäbe werden diese vor dem Auflegen der Deckblätter 2 und 3 durch Auftragen eines Härters befeuchtet. Diese zusätzliche Feuchtigkeit bewirkt eine örtliche Verstärkung des Frequenzbereiches und damit eine Verstärkung des Feldes im Randbereich der Presse. Der Härter beeinflusst aber vermutlich sowohl das Frequenzfeld als auch die chemische Reaktion bei der Leimaushärtung. Damit ist gewährleistet, dass die Deckblätter 2 und 3 auch bei einer sehr kurzen Presszeit von beispielsweise 20 Sekunden fest mit dem Rahmen verleimt werden. Das Zusammenstellen des Innenteils 4 und das Auflegen der geleimten Deckblätter 2 und 3 erfolgt vorzugsweise bei der in Figur 7 gezeigten Anordnung vor der Presse 20 auf einem Tisch 24, hinter dem ein Kipptisch 23 sowie eine Vorrichtung 12 angeordnet sind. Die Vorrichtung 21 weist gemäss den Figuren 5a und 5b zwei parallel zueinander angeordnete Träger 28, an denen innenseitig mehrere Rollen 22 gelagert sind. Auf diese Rollen 22 werden die zu verlängernden Platten 2 und 3 aufgelegt. Die beiden Platten 2 und 3 sind damit in Längsrichtung verschiebbar und lediglich die untere Platte 3 liegt randseitig punktuell auf Rollen 22 auf. Beim Zusammenstellen der zu verpressenden Platte wird die auf der Seite 9 mit einer Leimschicht versehene Platte 2 gefasst und auf den Kipptisch 21 gelegt. Die beleimte Fläche 9 ist hierbei vorne. Nun wird der Innenteil 4 auf diese Platte aufgelegt, und anschliessend wird das untere Deckblatt 3 von der Vorrichtung 1 abgenommen und auf die noch freie Seite des Innenteils 4 aufgelegt. Die so zusammengestellte Platte kann gemäss Figur 7 in Richtung des Pfeiles 27 der Presse 20 zugeführt werden. Nach dem Verpressen wird die Platte der Transportvorrichtung 26 zugeführt und in der Regel weiterverarbeitet. Eine weitere Transportvorrichtung ist für die Zufuhr der zusammenzustellenden Teile vorgesehen. Wie bereits erwähnt, ist die Presse 20 vorzugsweise eine Einetagenpresse, mit der jeweils lediglich eine Platte verpresst wird. Aufgrund der mit der Erfindung erreichbaren Pressdauer ist aber auch eine solche Einetagenpresse sehr leistungsfähig. Einetagenpressen bieten den Vorteil einer sehr flexiblen Produktion und einer geringen Investition. Sie lassen sich einfach beschicken und mit Seitendruckvorrichtungen ausrüsten, was wiederum erlaubt, auf Metallklammern zu verzichten, die bei der Weiterverarbeitung stören und Werkzeuge beschädigen können. Die einzelnen Arbeitsschritte können gemäss Figur 7 von einer einzigen vor dem Tisch 24 stehenden Person 29 ausgeführt werden.

## Patentansprüche

1. Verfahren zum Herstellen von Platten (1), insbesondere Türen, wobei zwei Deckblätter (2, 3) mit einem Kern (6) und einem diesen Kern (6) umgebenden Rahmen (5, 7) mittels einer Presse (20) und eines Frequenzfeldes verleimt werden, dadurch gekennzeichnet, dass vor dem Auflegen der Deckblätter (2, 3) auf die Rahmen (5, 7) oder Deckblätter (2, 3) in den Randzonen eine Substanz aufgebracht wird, welche den Aushärtungsvorgang in der Randzone beschleunigt.

2. Verfahren nach Anspruch 1, dadurch gekennzeichnet, dass der Rahmen (5, 7) mit einer Substanz, insbesondere einem Härter bestrichen wird, welche das Frequenzfeld und/oder die Abbindereaktion in der Randzone beeinflusst.

3. Verfahren nach Anspruch 1 oder 2, dadurch gekennzeichnet, dass die Platten (1) mittels einer Einetagenpresse (20) verpresst werden.

4. Verfahren nach Anspruch 3, dadurch gekennzeichnet, dass die Presse (20) streifenförmige, parallel und im Abstand zueinander ausgerichtete und in einem Kunststoff (16, 17) eingelegte Elektroden (14) aufweist.

5. Verfahren nach Anspruch 4, dadurch gekennzeichnet, dass zwischen die Elektroden (14) und die zu verpressenden Platten eine Pressplatte (15) eingelegt ist.

6. Verfahren nach Anspruch 5, dadurch gekennzeichnet, dass die Pressplatte (15) eine Stärke von mehreren Millimetern, insbesondere etwa 10 mm, aufweist.

7. Verfahren nach einem der Ansprüche 1 bis 6, dadurch gekennzeichnet, dass die zu verleimende Platte (1) mittels eines Kipptisches (23) zusammengestellt wird, und dass die aufzuleimenden Deckblätter (2, 3) aneinanderliegend jeweils aussenseitig beleimt und einzeln an den Kipptisch (23) übergeben werden.

8. Verfahren nach einem der Ansprüche 1 bis 7, dadurch gekennzeichnet, dass die beiden Deckblätter (2, 3) aneinanderliegend jeweils aussenseitig beleimt werden.

9. Anordnung zum Durchführen des Verfahrens nach Anspruch 1, mit einer Presse (20) und mit Mitteln (14) zum Erzeugen eines Frequenzfeldes sowie einer Einrichtung zum Zusammenstellen der zu verleimenden Platte (1), dadurch gekennzeichnet, dass die Einrichtung einen Kipptisch (23) sowie eine Vorrichtung (21) zum Beleimen von zwei aneinanderliegenden Deckblättern (2) aufweist.

10. Anordnung nach Anspruch 9, dadurch gekennzeichnet, dass die Vorrichtung (21) zum Beleimen der Deckblätter (2, 3) gegenüberliegende Reihen von Rollen (22) aufweist, auf denen die beiden Deckblätter (2, 3) auflegbar sind.
